# EUROPÄISCHE PATENTSCHRIFT

(11) **EP 3 139 580 B1**
(45) Veröffentlichungstag und Bekanntmachung des Hinweises auf die Patenterteilung: **14.03.2018**
(21) Anmeldenummer: 16183464.3
(22) Anmeldetag: 09.08.2016
(51) Int. Cl.: H04M 1/60, H04M 1/725, H04W 4/02, H04W 76/02

(54) **AUFBAU EINER DRAHTLOSEN KOMMUNIKATIONSVERBINDUNG ZWISCHEN EINEM MOBILGERÄT UND EINEM FAHRZEUG**
ESTABLISHMENT OF A WIRELESS COMMUNICATION LINK BETWEEN A MOBILE TERMINAL AND A VEHICLE
ÉTABLISSEMENT D'UNE LIAISON DE COMMUNICATION SANS FIL ENTRE UN APPAREIL MOBILE ET UN VEHICULE AUTOMOBILE

(30) Priorität: 04.09.2015 DE 102015217002
(43) Veröffentlichungstag der Anmeldung: 08.03.2017
(73) Patentinhaber: Volkswagen Aktiengesellschaft, 38440 Wolfsburg (DE)
(72) Erfinder: Gerlach, Simon, 38527 Meine (DE)

(56) Entgegenhaltungen:
- EP-A2- 1 259 052
- US-A1- 2008 039 018

## Beschreibung

Die vorliegende Erfindung betrifft eine Vorrichtung für ein Fahrzeug, um mit dieser Vorrichtung eine drahtlose Kommunikationsverbindung zwischen einem Mobilgerät und der Vorrichtung (und damit dem Fahrzeug) aufzubauen.

Die EP 1 259 052 A2 offenbart ein System zum automatischen Verbinden mit einem Mobilgerät. Dabei verbindet sich das System bevorzugt mit einem Mobilgerät eines Standardbenutzers. Nur wenn das nicht möglich ist, verbindet sich das System mit dem zuletzt verbundenen Mobilgerät oder mit einem anderen Mobilgerät, das dann das zuletzt verbundene Mobilgerät wird.

Die US 2008/039018 A1 beschreibt die Verbindung mit einem Mobilgerät. Dabei wird automatisch die Verbindung zu einem Mobilgerät aufgebaut, wenn dieses Mobilegerät das einzige antwortende Mobilgerät ist. Wenn es mehrere antwortende Mobilgeräte gibt, bestimmt ein Benutzer, zu welchem Mobilgerät die Verbindung aufgebaut wird.

Die US 2007/0238491 A1 beschreibt ein System und ein Verfahren zum Aufbau einer drahtlosen Verbindung zwischen Geräten und einem Fahrzeug. Dabei wird für den Fall, dass sich mehrere aktive drahtlose Telefone in der Funkreichweite des Fahrzeugs befinden, anhand der für verschiedene Benutzer gespeicherten Historie der Fahrer des Fahrzeugs bestimmt und mit dem Telefon des Fahrers eine drahtlose Verbindung zum Fahrzeug aufgebaut.

Die DE 10 2014 005 945 A1 offenbart die Übermittlung von Informationen zu einem Endgerät, um dadurch mehrere Endgeräte mit einem Kraftfahrzeug zu koppeln.

Die DE 10 2008 028 975 A1 beschreibt ein Kraftfahrzeug. Wenn in diesem Kraftfahrzeug mehrere Endgeräte verfügbar sind, wird das Endgerät zuerst mit dem Fahrzeug verbunden, das zuletzt mit dem Fahrzeug verbunden war. Werden mehrere Endgeräte gekoppelt, pflegt eine Freisprecheinrichtung eine Liste gekoppelter Endgeräte in der Reihenfolge des zuletzt verbundenen Endgeräts an erster Stelle.

Die DE 10 2009 054 253 A1 beschreibt die Verwendung eines mobilen Endgeräts in einem Fahrzeug. Dabei wird eine Gruppe von mobilen Endgeräten bestimmt, welche über eine Kommunikationsverbindung mit dem Fahrzeug koppelbar sind. Diese Gruppe von mobilen Endgeräten wird auf einer Bedieneinheit angezeigt und eine Benutzerauswahl erfasst, um eine drahtlose Kommunikationsverbindung zwischen dem ausgewählten mobilen Endgerät und einer Kommunikationsvorrichtung des Fahrzeugs aufzubauen.

Für die Benutzer von Kraftfahrzeugen ist es zunehmend wichtiger, ihre Mobilgeräte, insbesondere Smartphones, mit Systemen des Fahrzeugs, insbesondere mit dem Infotainmentsystem des Fahrzeugs, zu verbinden oder zu koppeln. Während das Herstellen einer kabelgebundenen Verbindung zwischen dem Mobilgerät und dem jeweiligen System des Fahrzeugs den meisten Benutzern keine Probleme bereitet, stellt das Herstellen einer drahtlosen Verbindung zwischen einem Mobilgerät und dem Fahrzeug für viele Benutzer eine große Hürde dar.

Daher stellt sich die vorliegende Erfindung die Aufgabe, den Aufbau einer drahtlosen Kommunikationsverbindung zwischen einem Fahrzeug und einem Mobilgerät zu vereinfachen.

Diese Aufgabe wird durch eine erfindungsgemäße Vorrichtung nach Anspruch 1 oder 2 gelöst. Die abhängigen Ansprüche definieren bevorzugte und vorteilhafte Ausführungsformen der vorliegenden Erfindung.

Im Rahmen der vorliegenden Erfindung wird eine Vorrichtung für ein Fahrzeug zum Aufbau einer drahtlosen Kommunikationsverbindung mit einem Mobilgerät bereitgestellt. Dabei umfasst die Vorrichtung Funkmittel. Die Vorrichtung ist ausgestaltet, um beispielsweise mit Zeitmessmitteln der Vorrichtung Zeitdauern oder Zeitintervalle zu erfassen (z.B. zu messen), während welchen sich ein jeweiliges Mobilgerät aus einer Vielzahl von Mobilgeräten in einer Reichweite der Funkmittel zum Aufbau einer drahtlosen Kommunikationsverbindung befindet. Dabei erfasst die Vorrichtung für jedes dieser Mobilgeräte innerhalb der Reichweite die jeweilige Zeitdauer, während welcher sich das jeweilige Mobilgerät innerhalb der Reichweite der Funkmittel befindet. Die Vorrichtung ist weiter ausgestaltet, um die drahtlose Kommunikationsverbindung mit einem oder mit mehreren Mobilgeräten abhängig von den vorher erfassten Zeitdauern (insbesondere automatisch) aufzubauen.

Unter einer drahtlosen Kommunikationsverbindung kann eine Bluetooth-Verbindung oder eine WLAN-Verbindung verstanden werden. Unter einem Mobilgerät wird neben einem Smartphone, ein normales Handy, ein Laptop, ein Tablet-Computer, aber auch ein drahltloser Lautsprecher, eine Audioanlage oder ein Fernseher verstanden. Ein erstes Mobilgerät kann z.B. mit einer Freisprechanlage des Fahrzeugs gekoppelt sein, während ein zweites Mobilgerät mit einer Musikanlage des Fahrzeugs gekoppelt sein kann. Mit anderen Worten können mehrere Mobilgeräte gleichzeitig mit der Vorrichtung bzw. dem Fahrzeug eine drahtlose Kommunikationsverbindung besitzen, wobei in der Regel pro Funktion (z.B. Freisprechanlage, Datenmodem, Musikanlage usw.) nur ein Mobilgerät gekoppelt ist.

Gerade ein automatischer Aufbau der drahtlosen Kommunikationsverbindung zwischen dem Mobilgerät und der Vorrichtung und damit dem Fahrzeug vereinfacht den Aufbau der drahtlosen Kommunikationsverbindung stark. Indem bei diesem Aufbau der drahtlosen Kommunikationsverbindung die Zeitdauern berücksichtigt werden, während welchen sich das jeweilige Mobilgerät in der Reichweite der Funkmittel der Vorrichtung befindet, kann bevorzugt mit demjenigen Mobilgerät die drahtlose Kommunikationsverbindung hergestellt werden, welches sich am häufigsten oder längsten innerhalb der Reichweite des Fahrzeugs befand.

Gemäß einem ersten Aspekt ist die erfindungsgemäße Vorrichtung ausgestaltet, um abhängig von den erfassten Zeitdauern eine erste Menge der Mobilgeräte zu bestimmen. Dabei ist jedes Mobilgerät, welches sich in der Reichweite des Fahrzeugs befindet und für welches die jeweils für dieses Mobilgerät erfassten Zeitdauern (beispielsweise in der Summe) einen ersten Schwellenwert übersteigen, ein Element der ersten Menge. Die Vorrichtung ist ausgestaltet, um mit einem oder auch mit mehreren Mobilgeräten aus der ersten Menge automatisch (d.h. insbesondere ohne jegliche Benutzereingabe) die drahtlose Kommunikationsverbindung aufzubauen.

Gemäß einem zweiten Aspekt ist die erfindungsgemäße Vorrichtung ausgestaltet, um beispielsweise mittels eines GPS-Sensors der Vorrichtung oder des Fahrzeugs verschiedene Positionen des Fahrzeugs zu erfassen, um pro Position und das jeweilige Mobilgerät, welches sich bei der jeweiligen Position in der Funkreichweite des Fahrzeugs befindet, neben der Zeitdauer auch die Anzahl dieser verschiedenen Positionen für das jeweilige Mobilgerät zu erfassen oder zu bestimmen. Bei dieser Ausführungsform ist die Vorrichtung ausgestaltet, um die drahtlose Kommunikationsverbindung mit dem mindestens einen Mobilgerät abhängig von dieser pro Mobilgerät erfassten Anzahl (zusätzlich zu dem Kriterium der Zeitdauern) aufzubauen.

Durch diese Ermittlung der unterschiedlichen Positionen des Fahrzeugs, an welchen sich das jeweilige Mobilgerät innerhalb der Reichweite der Funkmittel der Vorrichtung befand, kann vorteilhafterweise das Mobilgerät, mit welchem dann schließlich (insbesondere automatisch) die drahtlose Kommunikationsverbindung zum Fahrzeug hergestellt wird, (auch) abhängig von der Anzahl der Positionen, an welchen sich dieses Mobilgerät innerhalb der Reichweite des Fahrzeugs befand, bestimmt werden. Dadurch kann beispielsweise bei sonst vergleichbarer Summe von aufsummierten Zeitdauern mit demjenigen Mobilgerät bevorzugt eine drahtlose Kommunikationsverbindung aufgebaut werden, welches an mehr Positionen mit dem Fahrzeug gekoppelt war.

Wie bereits vorab beschrieben ist, wird insbesondere abhängig von den für jedes Mobilgerät erfassten Zeitdauern eine Summe für jedes Mobilgerät bestimmt. Abhängig von dieser Summe wird dann das mindestens eine Mobilgerät bestimmt, mit welchem (insbesondere automatisch) die drahtlose Kommunikationsverbindung zum Fahrzeug aufgebaut wird.

Beispielsweise kann die Summe für jedes Mobilgerät dadurch berechnet werden, dass für jedes Mobilgerät Zeitdauern, in welchen sich das jeweilige Mobilgerät innerhalb der Reichweite des Fahrzeugs befand, aufsummiert werden.

Dabei kann die erfindungsgemäße Vorrichtung ausgestaltet sein, um in regelmäßigen zeitlichen Abständen (z.B. nach jeder vorbestimmten Dauer der Betriebszeit (beispielsweise nach jeder Stunde Betriebszeit)) des Fahrzeugs oder auch bei jedem Fahrzeugstart die Summe des jeweiligen Mobilgeräts durch einen vorbestimmten Faktor ( > 1) zu teilen.

Durch diese erfindungsgemäße Ausführungsform wird eine Alterung der Zeitdauern bei der Bestimmung der Summe des jeweiligen Mobilgeräts berücksichtigt. Dadurch wird vorteilhafterweise verhindert, dass für Mobilgeräte, welche früher häufig im Fahrzeug genutzt wurden, aber aktuell nicht mehr verwendet werden, weiter priorisiert eine drahtlose Kommunikationsverbindung zum Fahrzeug aufgebaut wird.

Eine weitere Möglichkeit, die Alterung der Zeitdauern bei der Bestimmung der Summe des jeweiligen Mobilgeräts zu berücksichtigen, besteht darin, zur Berechnung der jeweiligen Summe nur die Zeitdauern zu berücksichtigen, welche innerhalb eines vorbestimmten Zeitfensters liegen, wobei das Zeitfenster mit dem aktuellen Zeitpunkt endet. Dadurch werden zur Bestimmung der Summe des jeweiligen Mobilgeräts beispielsweise nur Zeitdauern innerhalb dieses vorbestimmten Zeitfensters (beispielsweise innerhalb des letzten Monats) berücksichtigt.

Gemäß einer weiteren erfindungsgemäßen Ausführungsform wird die Anzahl der unterschiedlichen Positionen, an welchen sich das jeweilige Mobilgerät in der Reichweite des Fahrzeugs befand, berücksichtigt, indem die Summe des jeweiligen Mobilgeräts um eine zusätzliche Zeitdauer erhöht wird, welche umso größer ist, je größer diese Anzahl der unterschiedlichen Positionen für das jeweilige Mobilgerät ist.

Bei dieser Ausführungsform werden die Zeitdauern und die Anzahl der unterschiedlichen Positionen vorteilhafterweise anhand von einem Wert (der Summe) berücksichtigt, wodurch relativ einfach eine Sortierung anhand dieses Werts (der Summe) erfolgen kann.

Im Folgenden werden erfindungsgemäße Ausführungsformen beschrieben, bei welchen das Mobilgerät, mit welchem dann eine drahtlose Kommunikationsverbindung zum Fahrzeug aufgebaut wird, mit Hilfe einer auf einer Anzeige der Vorrichtung dargestellten Liste ausgewählt wird.

Gemäß einer ersten dieser Ausführungsformen bildet die Vorrichtung eine erste Menge und eine zweite Menge von Mobilgeräten. Dabei gehört jedes Mobilgerät, welches sich aktuell innerhalb der Funkreichweite des Fahrzeugs befindet, zu der ersten Menge. Jedes Mobilgerät, für welches zumindest einmal eine drahtlose Kommunikationsverbindung zu der Vorrichtung bzw. zu dem Fahrzeug aufgebaut worden ist, gehört zu der zweiten Menge. Die Vorrichtung stellt auf ihrer Anzeige die Liste der Mobilgeräte in folgender Reihenfolge dar:
- Zuerst werden diejenigen Mobilgerät aus der ersten Menge dargestellt, für welche die jeweilige Summe der Zeitdauern größer als ein vorbestimmter Summen-Schwellenwert ist.
- Anschließend werden diejenigen Mobilgeräte aus der ersten Menge dargestellt, welche noch nicht in der Liste dargestellt sind.
- Die Liste wird von denjenigen Mobilgeräten aus der zweiten Menge abgeschlossen, welche sich nicht auch in der ersten Menge befinden.

Die Vorrichtung ist dabei ausgestaltet, um eine Auswahl eines Mobilgeräts insbesondere durch einen Insassen des Fahrzeugs anhand der dargestellten Liste zu erfassen um anschließend die drahtlose Kommunikationsverbindung mit dem ausgewählten Mobilgerät aufzubauen.

Indem zuerst diejenigen Mobilgeräte in der Liste dargestellt werden, welche sich zum einen aktuell innerhalb der Funkreichweite des Fahrzeugs befinden und für welche zum anderen die berechnete Summe der Zeitdauern größer als der vorbestimmte Summen-Schwellenwert ist, befinden sich vorteilhafterweise die aus Sicht des Fahrers des Fahrzeugs wahrscheinlich relevantesten Mobilgeräte am Anfang der Liste.

Gemäß einer zweiten dieser Ausführungsformen erstellt die erfindungsgemäße Vorrichtung ebenfalls eine erste und eine zweite Menge. Im Unterschied zur vorab beschriebenen Ausführungsform gehört ein Mobilgerät, welches aktuell eine drahtlose Kommunikationsverbindung zum Fahrzeug aufweist, nicht zu der zweiten Menge. In der Liste gemäß dieser zweiten Ausführungsform finden sich zuerst diejenigen Mobilgeräte, welche sowohl zu der ersten Menge als auch zu der zweiten Menge gehören und für welche die Summe der Zeitdauern größer als ein vorbestimmter weiterer Summen-Schwellenwert ist.

Anschließend werden in der Liste diejenigen Mobilgeräte dargestellt, welche sowohl zu der ersten Menge als auch zu der zweiten Menge gehören, aber noch nicht in der Liste dargestellt sind. Wie bei der ersten Ausführungsform ist die Vorrichtung bei der zweiten Ausführungsform ausgestaltet, um zum einen eine Auswahl eines Mobilgeräts aus der dargestellten Liste zu erfassen und um zum anderen die drahtlose Kommunikationsverbindung mit dem ausgewählten Mobilgerät aufzubauen.

Diese zweite erfindungsgemäße Ausführungsform ist insbesondere vorhanden, um das Infotainmentsystem des Fahrzeugs anstelle des aktuell gekoppelten Mobilgeräts schnell mit einem anderen Mobilgerät zu koppeln. Der weitere Summen-Schwellenwert kann dabei dem Summen-Schwellenwert der ersten Ausführungsformen sprechen.

Bei dieser zweiten Ausführungsform kann die Liste der Mobilgeräte, welche sowohl zu der ersten Menge als auch zu der zweiten Menge gehören, zusätzlich diejenigen Mobilgeräte aufweisen, welche zu der ersten Menge gehören und für welche die Summe der Zeitdauern größer als ein anderer Summen-Schwellenwert ist und welche noch nicht in der Liste vorhanden sind. Anschließend werden diejenigen Mobilgeräte in der Liste dargestellt, welche zu der ersten Menge gehören und bisher noch nicht gelistet sind.

Diese Variante der zweiten Ausführungsform stellt sicher, dass alle Mobilgeräte, welche zu der ersten Menge gehören (sich also aktuell innerhalb der Funkreichweite des Fahrzeugs befinden), in der Liste vorhanden sind. Dabei kann der andere Summen-Schwellenwert dem weiteren Summen-Schwellenwert entsprechen.

Insbesondere wird in der Liste, welche gemäß irgendeiner Ausführungsform auf der Anzeige der Vorrichtung dargestellt ist, jedes Mobilgerät so dargestellt, dass dem jeweiligen Mobilgerät aufgrund seiner Darstellung zu entnehmen ist, ob das jeweilige Mobilgerät zu der ersten Menge, zu der zweiten Menge oder zu der ersten und der zweiten Menge gehört. Darüber hinaus kann der Darstellung jedes Mobilgerät der Liste entnommen werden, ob das jeweilige Mobilgerät nicht der ersten Menge, nicht der zweiten Menge oder weder der ersten Menge noch der zweiten Menge angehört. Beispielsweise können Mobilgeräte, welche nicht zu der ersten Menge gehören (d.h. welche sich aktuell nicht innerhalb der Funkreichweite des Fahrzeugs befinden), entsprechend markiert (z.B. ausgegraut) und nicht auswählbar dargestellt werden. Mobilgeräte, welche noch nicht mit der Vorrichtung gekoppelt waren (also kein Element der zweiten Menge sind) können als neu gekennzeichnet sein.

Darüber hinaus kann die Anzahl der Einträge in der Liste auf eine vorgegebene Anzahl begrenzt sein, um nur die relevantesten Mobilgeräte anzuzeigen. Optional können dann auf Wunsch des Benutzers alle Einträge angezeigt werden.

Erfindungsgemäß ist es auch möglich, zuerst automatisch zu versuchen, eine drahtlose Kommunikationsverbindung zu denjenigen Mobilgeräten aufzubauen, deren Summe unterhalb des vorbestimmten Summen-Schwellenwerts liegt. Dadurch werden diejenigen Mobilgeräte bevorzugt, welche sich erst seit kurzem innerhalb der Reichweite befinden (also relativ neu sind).

Im Rahmen der vorliegenden Erfindung wird auch ein erfindungsgemäßes System bereitgestellt, welches eine erfindungsgemäße Vorrichtung und ein Mobilgerät umfasst.

Schließlich wird im Rahmen der vorliegenden Erfindung auch ein erfindungsgemäßes Fahrzeug bereitgestellt, welches eine erfindungsgemäße Vorrichtung umfasst.

Die vorliegende Erfindung ist insbesondere für Kraftfahrzeuge geeignet. Selbstverständlich ist die vorliegende Erfindung nicht auf diesen bevorzugten Anwendungsbereich eingeschränkt, da die vorliegende Erfindung auch bei Schiffen, Flugzeugen sowie gleisgebundenen oder spurgeführten Fahrzeugen einsetzbar ist. In gewisser Weise kann die vorliegende Erfindung selbst bei stationären Objekten (z.B. zum Aufbau einer drahtlosen Kommunikationsverbindung zwischen einem Mobilgerät und einer stationären Vorrichtung) eingesetzt werden.

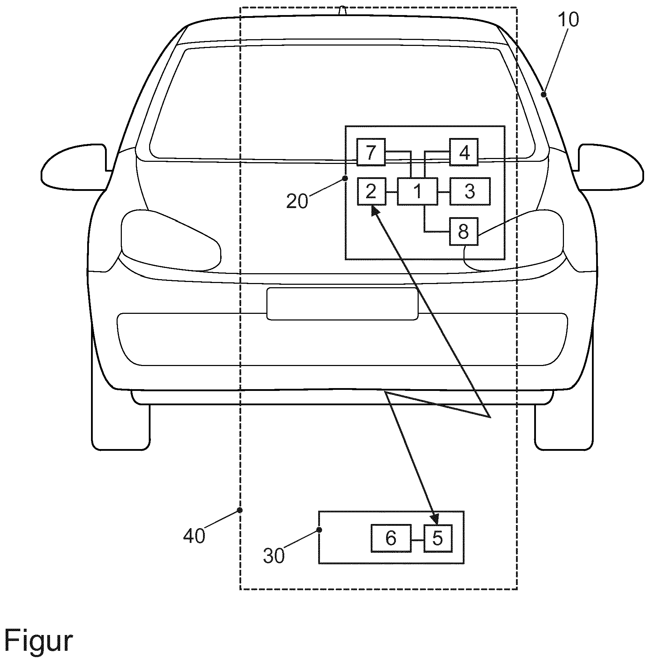

Im Folgenden wird die vorliegende Erfindung anhand bevorzugter erfindungsgemäßer Ausführungsformen mit Bezug zu der einzigen Fig. im Detail beschrieben.

Die einzige Fig. zeigt schematisch ein erfindungsgemäßes Fahrzeug mit einer erfindungsgemäßen Vorrichtung.

In der einzigen Fig. ist schematisch ein erfindungsgemäßes Fahrzeug 10 dargestellt, welches eine erfindungsgemäße Vorrichtung 20 umfasst. Die erfindungsgemäße Vorrichtung 20 umfasst ihrerseits neben einer Steuerung 1 eine Funkeinrichtung 2, eine Anzeige 3, einen Speicher 4, einen Zeitmesser 7 und einen GPS-Sensor 8. Die Funkeinrichtung 2 ist ausgestaltet, um eine drahtlose Kommunikationsverbindung mit einer Funkeinrichtung 5 eines Mobilgeräts 30 (z.B. eines Smartphones) aufzubauen. Das Mobilgerät 30 umfasst neben der Funkeinrichtung 5 eine Steuerung 6. Schließlich ist mit dem Bezugszeichen 40 ein erfindungsgemäßes System bezeichnet, welches die erfindungsgemäße Vorrichtung 20 und das Mobilgerät 30 umfasst.

Die Vorrichtung 20 scannt kontinuierlich Mobilgeräte 30, welche sich innerhalb der Funkreichweite der Funkeinrichtung 2 befinden. Die Mobilgeräte 30, welche sich aktuell innerhalb dieser Reichweite befinden, werden einer Menge A zugeschlagen. Für alle Mobilgeräte, welche sich irgendwann einmal innerhalb der Reichweite befanden, wird die Summe der Zeitdauern bestimmt, während welchen sich das jeweilige Mobilgerät innerhalb der Reichweite aufhielt. Dabei wird ein bestimmter Aufschlag der Summe hinzugefügt, wenn sich das jeweilige Mobilgerät 30 an unterschiedlichen Orten des Fahrzeugs innerhalb der Reichweite aufhielt, was mit Hilfe des GPS-Sensors 8 erkannt wird. Mobilgeräte 30, welche sich über eine längere Zeit innerhalb der Reichweite des Fahrzeugs befanden und sich aktuell auch innerhalb der Reichweite des Fahrzeugs 10 (genauer: der Reichweite der Funkeinrichtung 2) befinden werden einer Menge B zugeschlagen. Mobilgeräte, für welche zumindest einmal eine drahtlose Kommunikationsverbindung mit der Vorrichtung 20 bzw. mit dem Fahrzeug 10 aufgebaut wurde, sind Element einer Menge C. Die Zeitdauer, während welcher sich ein Mobilgerät 30 innerhalb der Reichweite der Funkeinrichtung 2 aufhält, wird mit dem Zeitmesser 7 gemessen. Jede Zeitdauer kann zumindest kurzfristig im Speicher 4 abgespeichert werden. Darüber hinaus kann jede Zeitdauer auch der jeweiligen Summe des zugehörigen Mobilgeräts zugeschlagen werden, welche im Speicher 4 gespeichert ist.

Die Menge A entspricht der vorab beschriebenen ersten Menge, während die Menge C der vorab beschriebenen zweiten Menge entspricht.

Wenn aktuell kein Mobilgerät 30 mit der Vorrichtung 20 (z.B. dem Infotainmentsystem des Fahrzeugs 10) gekoppelt ist, wird zuerst versucht, eine drahtlose Kommunikationsverbindung mit Mobilgeräten 30 automatisch aufzubauen, welche sich in der Schnittmenge der Menge B und der Menge C befinden. Dabei wird bevorzugt zuerst mit dem Mobilgerät aus der Schnittmenge versucht eine Kommunikationsverbindung automatisch aufzubauen, welches zuletzt mit der Vorrichtung 20 gekoppelt war. Wenn diese Versuche des Aufbaus einer drahtlosen Kommunikationsverbindung nicht erfolgreich waren, wird versucht, automatisch mit Mobilgeräten 30 eine drahtlose Kommunikationsverbindung aufzubauen, welche sich in der Schnittmenge der Menge A und der Menge C befinden. Wiederum wird bevorzugt mit dem Mobilgerät aus der Schnittmenge versucht eine Kommunikationsverbindung automatisch aufzubauen, welches zuletzt mit der Vorrichtung 20 gekoppelt war.

Wenn dieser automatische Aufbau einer drahtlosen Kommunikationsverbindung nicht erfolgreich war, wird auf der Anzeige 3 eine Liste von Mobilgeräten 30 dargestellt, welche folgende Reihenfolge aufweist:
1. Die Mobilgeräte 30, welche Element der Menge B sind.
2. Die Mobilgeräte 30, welche Element der Menge A, aber nicht Element der Menge B sind.
3. Die Mobilgeräte 30, welche Element der Menge C, aber nicht Element der Menge A sind. Diese Mobilgeräte 30 werden in der Liste unterscheidbar von den restlichen dargestellten Mobilgeräten dargestellt, da sie sich aktuell nicht innerhalb der Reichweite befinden.

Beispielsweise der Fahrer des Fahrzeugs 10 kann ein Mobilgerät 30 aus der dargestellten Liste auswählen, um dadurch von der Vorrichtung 20 eine drahtlose Kommunikationsverbindung zu diesem Mobilgerät 30 aufbauen zu lassen.

Für den Fall, dass bereits eine aktuelle drahtlose Kommunikationsverbindung zwischen der Vorrichtung 20 und einem Mobilgerät 30 vorhanden ist, kann folgende Liste auf der Anzeige 3 zum schnellen Wechsel auf ein anderes Mobilgerät in der folgenden Reihenfolge dargestellt werden. Dabei entspricht die Menge D der Menge C ohne das aktuell gekoppelte Mobilgerät.
1. Die Mobilgeräte 30, welche sowohl Element der Menge B als auch Element der Menge D sind. Diese Mobilgeräte 30 waren mal mit der Vorrichtung 20 gekoppelt und befinden sich schon seit langem innerhalb der Reichweite der Vorrichtung 20.
2. Die Mobilgeräte 30, welche sowohl Element der Menge A als auch Element der Menge D, aber nicht Element der Menge B sind. Diese Mobilgeräte 30 waren mal mit der Vorrichtung 20 gekoppelt und befinden sich erst seit kurzem innerhalb der Reichweite der Vorrichtung 20.
3. Die Mobilgeräte 30, welche Element der Menge B, aber nicht Element der Menge D sind. Diese Mobilgeräte 30 waren noch nie mit der Vorrichtung 20 gekoppelt, befinden sich aber schon seit langem innerhalb der Reichweite.
4. Die Mobilgeräte 30, welche innerhalb der Menge A, aber nicht innerhalb der Menge B und nicht innerhalb der Menge D sind. Diese Mobilgeräte 30 waren noch nie mit der Vorrichtung 20 gekoppelt, und befinden sich erst seit kurzem innerhalb der Reichweite.
5. Die Mobilgeräte 30, welche innerhalb der Menge D, aber nicht innerhalb der Menge A und nicht innerhalb der Menge B sind. Diese Mobilgeräte 30 werden von dem Rest der dargestellten Mobilgeräte unterscheidbar abgebildet, da sie sich nicht innerhalb der Reichweite befinden.

Beispielsweise der Fahrer des Fahrzeugs 10 kann ein Mobilgerät 30 aus der dargestellten Liste auswählen, um anstelle der drahtlosen Kommunikationsverbindung mit dem aktuell verbundenen Mobilgerät eine drahtlose Kommunikationsverbindung zwischen der Vorrichtung 20 und dem ausgewählten Mobilgerät 30 herzustellen.

### Bezugszeichenliste

- 1, 6: Steuerung
- 2, 5: Funkeinrichtung
- 3: Anzeige
- 4: Speicher
- 7: Zeitmesser
- 8: GPS-Sensor
- 10: Fahrzeug
- 20: Vorrichtung
- 30: Smartphone
- 40: System

## Patentansprüche

1. Vorrichtung für ein Fahrzeug (10) zum Aufbau einer drahtlosen Kommunikationsverbindung mit einem Mobilgerät (30),
wobei die Vorrichtung (20) Funkmittel (2) umfasst,
wobei die Vorrichtung (20) ausgestaltet ist, um Zeitdauern zu erfassen, während welchen sich ein jeweiliges Mobilgerät (30) aus einer Vielzahl von Mobilgeräten in einer Reichweite der Funkmittel (2) zum Aufbau der drahtlosen Kommunikationsverbindung befindet, wobei die Vorrichtung (20) für jedes Mobilgerät (30) der Vielzahl in der Reichweite die jeweilige Zeitdauer erfasst,
wobei die Vorrichtung (20) ausgestaltet ist, um die drahtlose Kommunikationsverbindung mit mindestens einem Mobilgerät (30) abhängig von den erfassten Zeitdauern aufzubauen,
wobei die Vorrichtung (20) ausgestaltet ist, um eine erste Menge der Mobilgeräte (30) abhängig von den Zeitdauern zu bestimmen, wobei jedes Mobilgerät (30), welches sich in der Reichweite des Fahrzeugs (10) befindet und für welches die jeweilige Zeitdauer einen ersten Schwellenwert übersteigt, zu der ersten Menge gehört, und
wobei die Vorrichtung (20) ausgestaltet ist, um mit mindestens einem Mobilgerät (30) aus der ersten Menge automatisch die drahtlose Kommunikationsverbindung aufzubauen.

2. Vorrichtung für ein Fahrzeug (10) zum Aufbau einer drahtlosen Kommunikationsverbindung mit einem Mobilgerät (30),
wobei die Vorrichtung (20) Funkmittel (2) umfasst,
wobei die Vorrichtung (20) ausgestaltet ist, um Zeitdauern zu erfassen, während welchen sich ein jeweiliges Mobilgerät (30) aus einer Vielzahl von Mobilgeräten in einer Reichweite der Funkmittel (2) zum Aufbau der drahtlosen Kommunikationsverbindung befindet, wobei die Vorrichtung (20) für jedes Mobilgerät (30) der Vielzahl in der Reichweite die jeweilige Zeitdauer erfasst,
wobei die Vorrichtung (20) ausgestaltet ist, um die drahtlose Kommunikationsverbindung mit mindestens einem Mobilgerät (30) abhängig von den erfassten Zeitdauern aufzubauen,
wobei die Vorrichtung (20) ausgestaltet ist, um eine Anzahl von unterschiedlichen Positionen des Fahrzeugs (10) zu erfassen, an welchen sich das jeweilige Mobilgerät (30) in der Reichweite der Funkmittel (2) befindet, und
wobei die Vorrichtung (20) ausgestaltet ist, um die drahtlose Kommunikationsverbindung mit dem Mobilgerät (30) zusätzlich zu der Abhängigkeit von den erfassten Zeitdauern abhängig von der Anzahl aufzubauen.

3. Vorrichtung nach einem der vorhergehenden Ansprüche,
**dadurch gekennzeichnet,**
**dass** die Vorrichtung (20) ausgestaltet ist, um abhängig von den erfassten Zeitdauern pro Mobilgerät (30) eine Summe zu bestimmen und um mit mindestens einem Mobilgerät (30) abhängig von der Summe automatisch die drahtlose Kommunikationsverbindung aufzubauen.

4. Vorrichtung nach Anspruch 3,
**dadurch gekennzeichnet,**
**dass** die Vorrichtung (20) ausgestaltet ist, um in regelmäßigen zeitlichen Abständen oder bei jedem Fahrzeugstart die Summe des jeweiligen Mobilgeräts durch einen Faktor, welcher größer als 1 ist, zu teilen.

5. Vorrichtung nach Anspruch 2 und Anspruch 3 oder 4,
**dadurch gekennzeichnet,**
**dass** die Vorrichtung (20) ausgestaltet ist, um die Summe des jeweiligen Mobilgeräts um eine zusätzliche Zeitdauer zu erhöhen, welche umso größer ist, je größer die Anzahl der unterschiedlichen Positionen für das jeweilige Mobilgerät ist.

6. Vorrichtung nach einem der Ansprüche 3-5,
**dadurch gekennzeichnet,**
**dass** die Vorrichtung (20) eine Anzeige (3) umfasst,
**dass** die Vorrichtung (20) ausgestaltet ist, um eine erste Menge und eine zweite Menge von Mobilgeräten (30) zu bestimmen, wobei jedes Mobilgerät (30), welches sich in der Reichweite des Fahrzeugs (10) befindet, zu der ersten Menge gehört, wobei jedes Mobilgerät (30), für welches einmal eine drahtlose Kommunikationsverbindung zu dem Fahrzeug (10) aufgebaut war, zu der zweiten Menge gehört,
**dass** die Vorrichtung (20) ausgestaltet ist, um eine Liste von Mobilgeräten auf der Anzeige darzustellen, wobei die Vorrichtung (20) die Liste in folgender Reihenfolge anordnet:
• zuerst diejenigen Mobilgeräte aus der ersten Menge, für welche die Summe größer als ein Summen-Schwellenwert ist,
• anschließend diejenigen Mobilgeräte aus der ersten Menge, welche sich noch nicht in der Liste befinden, und
• anschließend diejenigen Mobilgeräte aus der zweiten Menge, welche sich noch nicht in der Liste befinden,
**dass** die Vorrichtung (20) ausgestaltet ist, um eine Auswahl eines Mobilgeräts (30) aus der dargestellten Liste zu erfassen, und
**dass** die Vorrichtung (20) ausgestaltet ist, um die drahtlose Kommunikationsverbindung mit dem ausgewählten Mobilgerät (30) aufzubauen.

7. Vorrichtung nach einem der Ansprüche 3-5,
**dadurch gekennzeichnet,**
**dass** die Vorrichtung (20) eine Anzeige (3) umfasst,
**dass** die Vorrichtung (20) ausgestaltet ist, um eine erste Menge und eine zweite Menge von Mobilgeräten (30) zu bestimmen, wobei jedes Mobilgerät (30), welches sich in der Reichweite des Fahrzeugs (10) befindet, zu der ersten Menge gehört, wobei jedes Mobilgerät (30), für welches einmal eine drahtlose Kommunikationsverbindung zu dem Fahrzeug (10) aufgebaut war, zu der zweiten Menge gehört, wobei ein Mobilgerät (30), für welches aktuell eine drahtlose Kommunikationsverbindung zu der Vorrichtung (20) besteht, nicht zu der zweiten Menge gehört,
**dass** die Vorrichtung (20) ausgestaltet ist, um eine Liste von Mobilgeräten auf der Anzeige darzustellen, wobei die Vorrichtung (20) die Liste in folgender Reihenfolge anordnet:
• zuerst diejenigen Mobilgeräte, welche sowohl zu der ersten Menge als auch zu der zweiten Menge gehören und für welche die Summe größer als ein Summen-Schwellenwert ist, und
• anschließend diejenigen Mobilgeräte, welche sowohl zu der ersten Menge als auch zu der zweiten Menge gehören, aber sich noch nicht in der Liste befinden,
**dass** die Vorrichtung (20) ausgestaltet ist, um eine Auswahl eines Mobilgeräts (30) aus der dargestellten Liste zu erfassen, und
**dass** die Vorrichtung (20) ausgestaltet ist, um die drahtlose Kommunikationsverbindung mit dem ausgewählten Mobilgerät (30) aufzubauen.

8. Vorrichtung nach Anspruch 7,
**dadurch gekennzeichnet,**
**dass** die Vorrichtung (20) ausgestaltet ist, um die Liste von Mobilgeräten auf der Anzeige (3) weiter in folgender Reihenfolge zu füllen:
• nach den Mobilgeräten, welche sowohl zu der ersten Menge als auch zu der zweiten Menge gehören, diejenigen Mobilgeräte, welche zu der ersten Menge gehören und für welche die Summe größer als ein weiterer Summen-Schwellenwert ist und welche noch nicht gelistet sind, und
• anschließend diejenigen Mobilgeräte, welche zu der ersten Menge gehören und welche noch nicht gelistet sind.

9. Vorrichtung nach Anspruch 7 oder 8,
**dadurch gekennzeichnet,**
**dass** die Vorrichtung (20) ausgestaltet ist, um die Liste auf der Anzeige (3) derart darzustellen, dass für jedes dargestellte Mobilgerät (30) erkennbar ist, ob das jeweilige Mobilgerät zu der ersten Menge und/oder zweiten Menge gehört.

## Claims

1. Device for a vehicle (10) for setting up a wireless communication link to a mobile apparatus (30), wherein the device (20) comprises radio means (2), wherein the device (20) is configured to detect time periods during which a respective mobile apparatus (30) from a plurality of mobile apparatuses is located within range of the radio means (2) for setting up the wireless communication link, wherein the device (20) detects the respective time period for each mobile apparatus (30) of the plurality within range,
wherein the device (20) is configured to set up the wireless communication link to at least one mobile apparatus (30) as a function of the detected time periods,
wherein the device (20) is configured to determine a first set of the mobile apparatuses (30) as a function of the time periods, wherein each mobile apparatus (30) which is located within range of the vehicle (10) and for which the respective time period exceeds a first threshold value forms part of the first set, and wherein the device (20) is configured to set up the wireless communication link automatically to at least one mobile apparatus (30) from the first set.

2. Device for a vehicle (10) for setting up a wireless communication link to a mobile apparatus (30), wherein the device (20) comprises radio means (2), wherein the device (20) is configured to detect time periods during which a respective mobile apparatus (30) from a plurality of mobile apparatuses is located within range of the radio means (2) for setting up the wireless communication link, wherein the device (20) detects the respective time period for each mobile apparatus (30) of the plurality within range,
wherein the device (20) is configured to set up the wireless communication link to at least one mobile apparatus (30) as a function of the detected time periods,
wherein the device (20) is configured to detect a number of different positions of the vehicle (10) at which the respective mobile apparatus (30) is within range of the radio means (2), and
wherein the device (20) is configured to set up the wireless communication link to the mobile apparatus (30) as a function of the number, in addition to the dependence on the detected time periods.

3. Device according to one of the preceding claims, **characterized**
**in that** the device (20) is configured to determine a total as a function of the detected time periods per mobile apparatus (30) and to set up automatically the wireless communication link to at least one mobile apparatus (30) as a function of the total.

4. Device according to Claim 3,
**characterized**
**in that** the device (20) is configured to divide the total of the respective mobile apparatus by a factor which is larger than 1 at regular time intervals or whenever the vehicle starts.

5. Device according to Claim 2 and Claim 3 or 4, **characterized**
**in that** the device (20) is configured to increase the total of the respective mobile apparatus by an additional time period which is longer the larger the number of different positions for the respective mobile apparatus.

6. Device according to one of Claims 3-5, **characterized**
**in that** the device (20) comprises a display (3),
**in that** the device (20) is configured to determine a first set and a second set of mobile apparatuses (30), wherein each mobile apparatus (30) which is located within the range of the vehicle (10) forms part of the first set, wherein each mobile apparatus (30) for which a wireless communication link has been set up to the vehicle (10) once forms part of the second set,
**in that** the device (20) is configured to display a list of mobile apparatuses on the display, wherein the device (20) arranges the list in the following order:
• firstly those mobile apparatuses from the first set for which the total is larger than a total threshold value,
• subsequently those mobile apparatuses from the first set which are not yet on the list, and
• subsequently those mobile apparatuses from the second set which are not yet on the list,
**in that** the device (20) is configured to detect a selection of a mobile apparatus (30) from the displayed list, and
**in that** the device (20) is configured to set up the wireless communication link to the selected mobile apparatus (30).

7. Device according to one of Claims 3-5, **characterized**
**in that** the device (20) comprises a display (3),
**in that** the device (20) is configured to determine a first set and a second set of mobile apparatuses (30), wherein each mobile apparatus (30) which is located within the range of the vehicle (10) forms part of the first set, wherein each mobile apparatus (30) for which a wireless communication link to the vehicle (10) has been set up once forms part of the second set, wherein a mobile apparatus (30) for which there is currently a wireless communication link to the device (20) does not form part of the second set,
**in that** the device (20) is configured to display a list of mobile apparatuses on the display, wherein the device (20) arranges the list in the following order:
• firstly those mobile apparatuses which form part both of the first set and of the second set and for which the total is larger than a total threshold value, and
• subsequently those mobile apparatuses which form part both of the first set and of the second set but are not yet on the list,
**in that** the device (20) is configured to detect a selection of a mobile apparatus (30) from the displayed list, and
**in that** the device (20) is configured to set up the wireless communication link to the selected mobile apparatus (30).

8. Device according to Claim 7,
**characterized**
**in that** the device (20) is configured also to fill the list of mobile apparatuses on the display (3) in the following order:
• according to the mobile apparatuses which form part both of the first set and of the second set, those mobile apparatuses which form part of the first set and for which the total is larger than a further total threshold value and which are not yet listed, and
• subsequently those mobile apparatuses which form part of the first set and which are not yet listed.

9. Device according to Claim 7 or 8,
**characterized**
**in that** the device (20) is configured to display the list on the display (3) in such a way that for each displayed mobile apparatus (30) it is possible to determine whether the respective mobile apparatus forms part of the first set and/or second set.

## Revendications

1. Dispositif destiné à un véhicule (10) pour établir une liaison de communication sans fil avec un appareil mobile (30),
dans lequel le dispositif (20) comprend des moyens radio (2),
dans lequel le dispositif (20) est conçu pour détecter des périodes de temps pendant lesquelles un appareil mobile respectif (30) parmi une pluralité d'appareils mobiles se trouve à portée des moyens radio (2) pour établir la liaison de communication sans fil, dans lequel le dispositif (20) détecte la période de temps respective pour chaque appareil mobile (30) de la pluralité d'appareils mobiles se trouvant à portée, dans lequel le dispositif (20) est conçu pour établir la liaison de communication sans fil avec au moins un appareil mobile (30) en fonction des périodes de temps détectées,
dans lequel le dispositif (20) est conçu pour déterminer un premier ensemble des appareils mobiles (30) en fonction des périodes de temps, dans lequel chaque appareil mobile (30), qui se trouve à portée du véhicule (10) et pour lequel la période de temps respective dépasse une première valeur de seuil, appartient au premier ensemble, et
dans lequel le dispositif (20) est conçu pour établir automatiquement la liaison de communication sans fil avec au moins un appareil mobile (30) appartenant au premier ensemble.

2. Dispositif destiné à un véhicule (10) pour établir une liaison de communication sans fil avec un appareil mobile (30),
dans lequel le dispositif (20) comprend des moyens radio (2),
dans lequel le dispositif (20) est conçu pour détecter des périodes de temps pendant lesquelles un appareil mobile respectif (30) parmi une pluralité d'appareils mobiles se trouve à portée des moyens radio (2) pour établir la liaison de communication sans fil, dans lequel le dispositif (20) détecte la période de temps respective pour chaque appareil mobile (30) de la pluralité d'appareils mobiles se trouvant à portée, dans lequel le dispositif (20) est conçu pour établir la liaison de communication sans fil avec au moins un appareil mobile (30) en fonction des périodes de temps détectées,
dans lequel le dispositif (20) est conçu pour détecter un nombre de positions différentes du véhicule (10) auxquelles l'appareil mobile respectif (30) se trouve à portée des moyens radio (2), et
dans lequel le dispositif (20) est conçu pour établir en fonction dudit nombre la liaison de communication sans fil avec l'appareil mobile (30) en plus de la dépendance vis-à-vis des périodes de temps détectées.

3. Dispositif selon l'une des revendications précédentes,
**caractérisé en ce que** le dispositif (20) est conçu pour déterminer une somme en fonction des périodes de temps détectées par appareil mobile (30) et pour établir automatiquement la liaison de communication sans fil avec au moins un appareil mobile (30) en fonction de la somme.

4. Dispositif selon la revendication 3,
**caractérisé en ce que** le dispositif (20) est conçu pour diviser la somme de l'appareil mobile respectif par un facteur supérieur à 1 à des intervalles de temps réguliers ou à chaque démarrage du véhicule.

5. Dispositif selon la revendication 2 et la revendication 3 ou 4,
**caractérisé en ce que** le dispositif (20) est conçu pour augmenter la somme de l'appareil mobile respectif d'une période de temps supplémentaire qui est supérieure au nombre de positions différentes pour l'appareil mobile respectif.

6. Dispositif selon l'une des revendications 3-5,
**caractérisé en ce que** le dispositif (20) comprend un afficheur (3),
**en ce que** le dispositif (20) est conçu pour déterminer un premier ensemble et un second ensemble d'appareils mobiles (30), dans lequel chaque appareil mobile (30) se trouvant à portée du véhicule (10) appartient au premier ensemble, dans lequel chaque appareil mobile (30) pour lequel une liaison de communication sans fil avec le véhicule (10) a été établie une fois, appartient au second ensemble,
**en ce que** le dispositif (20) est conçu pour afficher une liste de dispositifs mobiles sur l'afficheur, dans lequel le dispositif (20) organise la liste dans l'ordre suivant :
• tout d'abord les appareils mobiles du premier ensemble pour lesquels la somme est supérieure à une valeur de seuil de somme,
• puis les appareils mobiles du premier ensemble qui ne figurent pas encore dans la liste, et
• ensuite les appareils mobiles du second ensemble qui ne figurent pas encore dans la liste,
**en ce que** le dispositif (20) est conçu pour détecter une sélection d'un appareil mobile (30) dans la liste affichée, et
**en ce que** le dispositif (20) est conçu pour établir la liaison de communication sans fil avec l'appareil mobile (30) sélectionné.

7. Dispositif selon l'une des revendications 3-5,
**caractérisé en ce que** le dispositif (20) comprend un afficheur (3),
**en ce que** le dispositif (20) est conçu pour déterminer un premier ensemble et un second ensemble d'appareils mobiles (30), dans lequel chaque appareil mobile (30) se trouvant à portée du véhicule (10) appartient au premier ensemble, dans lequel chaque appareil mobile (30) pour lequel une liaison de communication sans fil a été établie une fois avec le véhicule (10) appartient au second ensemble, dans lequel un appareil mobile (30) pour lequel il existe actuellement une liaison de communication sans fil avec le dispositif (20) n'appartient pas au second ensemble,
**en ce que** le dispositif (20) est conçu pour afficher une liste d'appareils mobiles sur l'afficheur, dans lequel le dispositif (20) organise la liste dans l'ordre suivant :
• tout d'abord les appareils mobiles qui appartiennent à la fois au premier et au second ensemble et pour lesquels la somme est supérieure à un seuil de somme, et
• ensuite les appareils mobiles qui appartiennent à la fois au premier et au second ensemble, mais qui ne figurent pas encore dans la liste,
**en ce que** le dispositif (20) est conçu pour détecter une sélection d'un appareil mobile (30) dans la liste affichée, et
**en ce que** le dispositif (20) est conçu pour établir la liaison de communication sans fil avec l'appareil mobile sélectionné (30).

8. Dispositif selon la revendication 7, **caractérisé en ce que** le dispositif (20) est conçu pour remplir en outre la liste des appareils mobiles sur l'afficheur (3) dans l'ordre suivant :
• après les appareils mobiles qui appartiennent à la fois au premier et au second ensemble, les appareils mobiles qui appartiennent au premier ensemble et pour lesquels la somme est supérieure à un autre seuil de somme et qui ne sont pas encore répertoriés, et
• ensuite les appareils mobiles qui appartiennent au premier ensemble et qui ne sont pas encore répertoriés.

9. Dispositif selon la revendication 7 ou 8, **caractérisé en ce que** le dispositif (20) est conçu pour afficher la liste sur l'afficheur (3) de manière à ce que, pour chaque appareil mobile affiché (30), il soit possible de reconnaître si l'appareil mobile correspondant appartient au premier et/ou au second ensemble.
